(19) Europäisches Patentamt
European Patent Office
Office européen des brevets

(11) EP 1 675 462 B2

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**20.06.2012 Patentblatt 2012/25**

(45) Hinweis auf die Patenterteilung:
**14.05.2008 Patentblatt 2008/20**

(21) Anmeldenummer: **04765702.8**

(22) Anmeldetag: **30.09.2004**

(51) Int Cl.:
***A01N 51/00*** *(2006.01)*

(86) Internationale Anmeldenummer:
**PCT/EP2004/010912**

(87) Internationale Veröffentlichungsnummer:
**WO 2005/036966 (28.04.2005 Gazette 2005/17)**

(54) **SYNERGISTISCHE INSEKTIZIDE MISCHUNGEN**

SYNERGISTIC INSECTICIDE MIXTURES

MELANGES INSECTICIDES A EFFET SYNERGIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **13.10.2003 DE 10347440**

(43) Veröffentlichungstag der Anmeldung:
**05.07.2006 Patentblatt 2006/27**

(73) Patentinhaber: **Bayer CropScience AG**
**40789 Monheim (DE)**

(72) Erfinder:
- **ANDERSCH, Wolfram**
  **51469 Bergisch Gladbach (DE)**
- **JESCHKE, Peter**
  **51467 Bergisch Gladbach (DE)**
- **THIELERT, Wolfgang**
  **51519 Odenthal (DE)**

(56) Entgegenhaltungen:
**WO-A1-02/17720** **WO-A1-97/40692**
**WO-A1-03/063592** **WO-A1-03/070000**
**WO-A1-03/070001** **US-A- 4 849 432**
**US-A1- 2002 193 352** **US-B1- 6 306 414**
**US-B2- 6 479 542**

- **DATABASE CA [Online] CHEMICAL ABSTRACTS SERVICE, COLUMBUS, OHIO, US; NISHIMOTO, KOICHI ET AL NISHIMOTO, KOICHI ET AL: "Synthetic resin sheets with long-lasting synergistic antitermite activity and their manufacture Synthetic resin sheets with long-lasting synergistic antitermite activity and their manufacture" XP002314488 gefunden im STN Database accession no. 2003:166933 & JP 2003 063911 A2 (SEKISUI PLASTICS CO., LTD., JAPAN; FUKUBI CHEMICAL INDUSTRY CO., LTD.) 5. März 2003 (2003-03-05)**
- **NAUEN, R., ET AL.: 'Thiamethoxam is a neonicotinoid precursor converted to clothianidin in insects and plants' PESTICIDE BIOCHEMISTRY AND PHYSIOLOGY Bd. 76, 2003, USA, Seiten 55 - 69**

Bemerkungen:
Die Akte enthält technische Angaben, die nach dem Eingang der Anmeldung eingereicht wurden und die nicht in dieser Patentschrift enthalten sind.

EP 1 675 462 B2

## Beschreibung

Die vorliegende Erfindung betrifft neue Wirkstoffkombinationen, die als Wirkstoffe jeweils zwei Verbindungen aus der Reihe der Chlornicotinylinsektizide enthalten und sehr gute insektizide Eigenschaften besitzen.

Es ist bereits bekannt, dass Chlornicotinylinsektizide zur Bekämpfung von tierischen Schädlingen, insbesondere Insekten eingesetzt werden können. Zu den Chlornicotinylinsektiziden gehören folgende Verbindungen:

Imidacloprid der Formel (I)

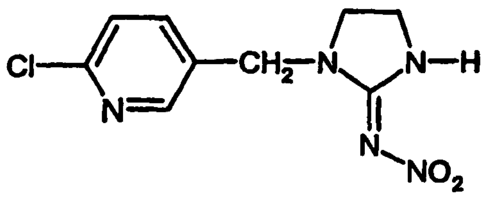

(I)

(vgl. EP 0 192 060)

Clothianidin der Formel (II)

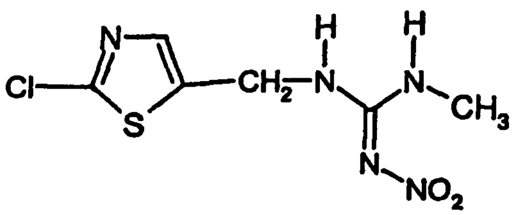

(II)

(EP 0 376 279)

Dinotefuran der Formel (III)

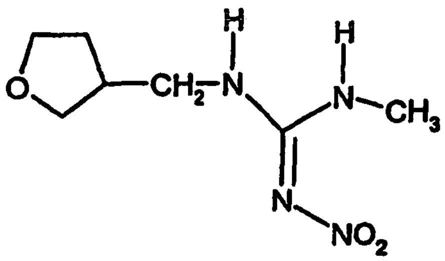

(III)

(EP 0 649 845)

Thiamethoxam der Formel (IV)

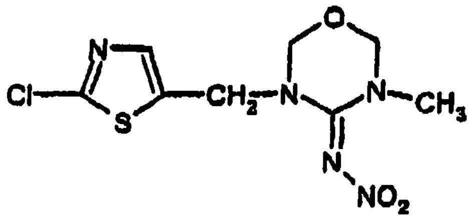

(IV)

(EP 0 580 553)

Thiacloprid der Formel (V)

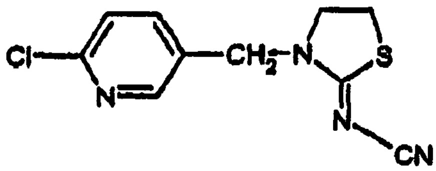

(V)

(EP 0 235 725)

Acetamiprid der Formel (VI)

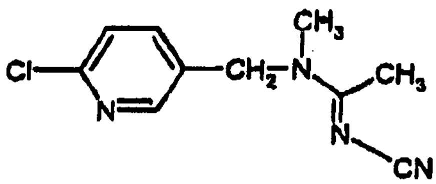

(VI)

(WO 91/04965)

Nitenpyram der Formel (VII)

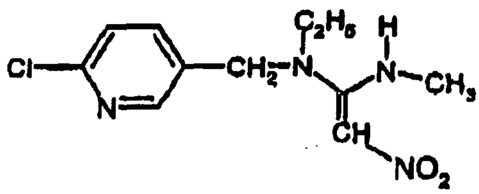

(VII)

(EP 0 302 389)

Die Wirksamkeit dieser Verbindungen ist gut, lässt aber bei niedrigen AutWandmengen oder gegen einzelne Schüdlinge in manchen Füllen zu wünschen übrig,

In JP2003063911 A2 wird eine Kombination aus Acetamiprid, Imidacloprid und Silafluofen zur Termitenbekämpfung beschrieben.

Es wurde nun gefunden, dass Mischungen enthaltend jeweils mindestens zwei und insbesondere genau zwei

Verbindungen aus der Reihe der Chlornicotinylinsektizide, insbesondere der Formeln (I) bis (VII), synergistisch wirksam sind und sich zur Bekämpfung von Insekten in der Landwirtschaft eignen.

Aufgrund dieses Synergismus können deutlich geringere Wirkstoffmengen verwendet werden, d.h. die Wirkung der Mischung ist größer als die Wirkung der Einzelkomponenten.

Das Verhältnis der beiden eingesetzten Wirkstoffe zueinander, beträgt 10:1-1:10 bezogen auf Gewichtsteile, sowie die anzuwendende Gesamtmenge der Mischung ist von der Art und dem Vorkommen der Insekten bzw. Akarinen abhängig und kann in diesem Bereich variiert werden. Die optimalen Verhältnisse und Gesamteinsatzmengen können bei jeder Anwendung jeweils durch Testreihen ermittelt werden.

Folgende anzuwendende Mischungen seien im Einzelnen genannt:

Tabelle

| Mischung Nr. | ErsterWirkstoff | ZweiterWirkstoff | Mischungsverhältnis |
|---|---|---|---|
| 1 | Imidacloprid | Clothianidin | 10 : 1 - 1 : 10 |
| 2 | Imidacloprid | Dinotefuran | " |
| 4 | Imidacloprid | Thiacloprid | " |
| 5 | Imidacloprid | Acetamiprid | " |
| 6 | Imidacloprid | Nitenpyram | " |
| 7 | Clothianidin | Dinotefuran | " |
| 8 | Clothianidin | Thiamethoxam | " |
| 9 | Clothianidin | Thiacloprid | " |
| 10 | Clothianidin | Acetamiprid | " |
| 11 | Clothianidin | Nitenpyram | " |
| 12 | Dinotefuran | Thiamethoxam | " |
| 13 | Dinotefuran | Thiacloprid | " |
| 14 | Dinotefuran | Acetamiprid | " |
| 15 | Dinotefuran | Nitenpyram | " |
| 16 | Thiamethoxam | Thiacloprid | " |
| 19 | Thiacloprid | Acetamiprid | " |
| 20 | Thiacloprid | Nitenpyram | " |
| 21 | Acetamiprid | Nitenpyram | " |

Die Wirkstoffkombinationen eignen sich bei guter Pflanzenverträglichkeit und günstiger Warmblütertoxizität zur Bekämpfung von Insekten, die in der Landwirtschaft vorkommen. Sie können vorzugsweise als Pflanzenschutzmittel eingesetzt werden. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spp.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Acheta domesticus, Gryllotalpa spp., Locusta migratoria migratorioides, Melanoplus spp., Schistocerca gregaria.

Aus der Ordnung der Blattaria z.B. Blatta orientalis, Periplaneta americana, Leucophaea maderae, Blattella germanica.

Aus der Ordnung der Dermaptera z.B. Forficula auricularia.

Aus der Ordnung der Isoptera z.B. Reticulitermes spp.

Aus der Ordnung der Phthiraptera z.B. Pediculus humanus corporis, Haematopinus spp., Linognathus spp., Trichodectes spp., Damalinia spp.

Aus der Ordnung der Thysanoptera z.B. Hercinothrips femoralis, Thrips tabaci, Thrips palmi, Frankliniella occidentalis.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Maorosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp., Oulema oryzae.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp., Liriomyza spp.

Aus der Ordnung der Siphonaptera z.B. Xenopsylla cheopis, Ceratophyllus spp.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Hervorgehoben sei hierbei die besonders vorteilhafte Wirkung der erfindungsgemäß einsetzbare Mittel hinsichtlich der Anwendung in Getreidepflanzen, wie z.B. Weizen, Hafer, Gerste, Dinkel, Triticale und Roggen, aber auch in Mais, Hirse, Reis, Zuckerrohr, Soja, Sonnenblumen, Kartoffeln, Baumwolle, Raps, Canola, Tabak, Zuckerrüben Futterrüben, Spargel, Hopfen sowie Obstpflanzen (umfassend Kernobst wie z.B. Äpfel und Birnen, Steinobst wie z.B. Pfirsiche, Nektarinen, Kirschen, Pflaumen und Aprikosen, Zitrusfrüchte wie z.B. Orangen, Grapefruits, Limetten, Zitronen, Kumquats, Mandarinen und Satsumas, Nüsse wie z.B. Pistazien, Mandeln, Walnüsse und Pecannüsse, tropische Früchte wie z.B. Mango, Papaya, Ananas, Datteln und Bananen, und Weintrauben) und Gemüse (umfassend Blattgemüse, wie z.B. Endivien, Feldsalat, Knollenfenchel, Kopf- und Pflücksalate, Mangold, Spinat und Zichoriensalat, Kohlgemüse wie z.B. Blumenkohl, Brokkoli, Chinakohl, Grünkohl (Winter- oder Krauskohl), Kohlrabi, Rosenkohl, Rotkohl, Weißkohl und Wirsing, Fruchtgemüse wie z.B. Auberginen, Gurken, Paprika, Speisekürbisse, Tomaten, Zucchini und Zuckermais, Wurzelgemüse wie z.B. Knollensellerie, Mairüben, Möhren, Gelbe Rüben, Radieschen, Rettich, Rote Rüben, Schwarzwurzeln und Stangensellerie, Hülsenfrüchte wie z.B. Erbsen und Bohnen sowie Zwiebelgemüse wie z.B. Lauch und Speisezwiebeln).

Die erfindungsgemäße Behandlung der Pflanzen und Pflanzenteile mit den Wirkstoffkombinationen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Insbesondere eignen sich die erfindungsgemäß einsetzbare Mittel zur Behandlung von Saatgut. So entsteht

ein großer Teil des durch Schädlinge verursachten Schadens an Kulturpflanzen bereits durch den Befall des Saatguts während der Lagerung und nach dem Einbringen des Saatguts in den Boden sowie während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanze führen kann. Es besteht daher ein insbesondere großes Interesse daran, das Saatgut und die keimende Pflanze durch den Einsatz geeigneter Mittel zu schützen.

Die Bekämpfung von Schädlingen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellen gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen. Es ist weiterhin erstrebenswert, die Menge des eingesetzten Wirkstoffs dahingehend zu optimieren, dass das Saatgut und die keimende Pflanze vor dem Befall durch Schädlinge bestmöglich geschützt wird, ohne jedoch die Pflanze selbst durch den eingesetzten Wirkstoff zu schädigen. Insbesondere sollten Verfahren zur Behandlung von Saatgut auch die intrinsischen insektiziden Eigenschaften transgener Pflanzen einbeziehen, um einen optimalen Schutz des Saatguts und der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut und keimenden Pflanzen vor dem Befall von Schädlingen, indem das Saatgut mit einem erfindungsgemäßen Mittel behandelt wird. Die Erfindung bezieht sich ebenfalls auf die Verwendung der erfindungsgemäß einsetzbare Mittel zur Behandlung von Saatgut zum Schutz des Saatguts und der keimenden Pflanze vor Insekten. Weiterhin bezieht sich die Erfindung auf Saatgut, welches zum Schutz vor Insekten mit einem erfindungsgemäß einsetzbare Mittel behandelt wurde.

Einer der Vorteile der vorliegenden Erfindung ist es, dass aufgrund der besonderen systemischen Eigenschaften der erfindungsgemäß einsetzbare Mittel die Behandlung des Saatguts mit diesen Mitteln nicht nur das Saatgut selbst, sondern auch die daraus hervorgehenden Pflanzen nach dem Auflaufen vor Insekten schützt. Auf diese Weise kann die unmittelbare Behandlung der Kultur zum Zeitpunkt der Aussaat oder kurz danach entfallen.

Ein weiterer Vorteil besteht in der synergistischen Erhöhung der insektiziden Wirksamkeit der erfindungsgemäß einsetzbare Mittel gegenüber dem jeweiligen Einzelwirkstoff, die über die Summe der Wirksamkeit der beiden einzeln angewendeten Wirkstoffe hinausgeht. Damit wird eine Optimierung der Menge des eingesetzten Wirkstoffs ermöglicht.

Ebenso ist es als vorteilhaft anzusehen, dass die erfindungsgemäß einsetzbare Mittel insbesondere auch bei transgenem Saatgut eingesetzt werden können, wobei die aus diesem Saatgut hervorgehenden Pflanzen zur Expression eines gegen Schädlinge gerichteten Proteins befähigt sind. Durch die Behandlung solchen Saatguts mit den erfindungsgemäß einsetzbare Mittel können bestimmte Schädlinge bereits durch die Expression des z.B. insektiziden Proteins kontrolliert werden, und es zusätzlich überraschenderweise zu einer synergistischen Wirkungsergänzung mit den erfindungsgemäßen Mitteln kommt, was die Effektivität des Schutzes vor Schädlingsbefall noch einmal verbessert.

Die erfindungsgemäß einsetzbare Mittel eignen sich zum Schutz von Saatgut jeglicher Pflanzensorte wie bereits vorstehend genannt, die in der Landwirtschaft, im Gewächshaus, in Forsten, im Gartenbau oder im Weinanbau eingesetzt wird. Insbesondere handelt es sich dabei um Saatgut von Mais, Erdnuss, Canola, Raps, Mohn, Olive, Kokosnuss, Kakao, Soja, Baumwolle, Rübe (z.B. Zuckerrübe und Futterrübe), Reis, Hirse, Weizen, Gerste, Hafer, Roggen, Sonnenblume, Zuckerrohr oder Tabak. Die erfindungsgemäß einsetzbare Mittel eigenen sich ebenfalls zur Behandlung des Saatguts von Obstpflanzen und Gemüse wie vorstehend bereits genannt. Besondere Bedeutung kommt der Behandlung des Saatguts von Mais, Soja, Baumwolle, Weizen und Canola oder Raps zu. So eignet sich z.B. die erfindungsgemäß einsetzbare Mittel umfassend die Wirkstoffe Methiocarb und Imidacloprid insbesondere zur Behandlung des Saatguts von Mais.

Wie vorstehend bereits erwähnt, kommt auch der Behandlung von transgenem Saatgut mit einem erfindungsgemäß einsetzbare Mittel eine besondere Bedeutung zu. Dabei handelt es sich um das Saatgut von Pflanzen, die in der Regel zumindest ein heterologes Gen enthalten, das die Expression eines Polypeptids mit insbesondere insektiziden Eigenschaften steuert. Die heterologen Gene in transgenem Saatgut können dabei aus Mikroorganismen wie *Bacillus, Rhizobium, Pseudomonas, Serratia, Trichoderma, Clavibacter, Glomus* oder *Gliocladium* stammen. Die vorliegende Erfindung eignet sich besonders für die Behandlung von transgenem Saatgut, das zumindest ein heterologes Gen enthält, das aus *Bacillus sp.* stammt und dessen Genprodukt Wirksamkeit gegen Maiszünsler und/oder Maiswurzel-Bohrer zeigt. Besonders bevorzugt handelt es sich dabei um ein heterologes Gen, das aus *Bacillus thuringiensis* stammt.

Im Rahmen der vorliegenden Erfindung wird das erfindungsgemäß einsetzbare Mittel alleine oder in einer geeigneten Formulierung auf das Saatgut aufgebracht. Vorzugsweise wird das Saatgut in einem Zustand behandelt, in dem so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde.

Im Allgemeinen muss bei der Behandlung des Saatguts darauf geachtet werden, dass die Menge des auf das Saatgut aufgebrachten erfindungsgemäß einsetzbare Mittel und/oder weiterer Zusatzstoffe so gewählt wird, dass die

Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die erfindungsgemäß einsetzbare Mittel können unmittelbar aufgebracht werden, also ohne weitere Komponenten zu enthalten und ohne verdünnt worden zu sein. In der Regel ist es vorzuziehen, die Mittel in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Die Wirkstoffkombinationen können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Einweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 %.

Die erfindungsgemäß einsetzbare Mittel enthalten bevorzugt neben den beiden Chlornicotinylinsektiziden der Formeln (I) bis(VII) keine weiteren Wirkstoffe.

Der erfindungsgemäß einsetzbare Mittel können gegebenenfalls in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen.

Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Besonders günstige Mischpartner sind z.B. die folgenden:

**Fungizide:**

Aldimorph, Ampropylfos, Ampropylfos-Kalium, Andoprim, Anilazin, Azaconazol, Azoxystrobin,

Benalaxyl, Benodanil, Benomyl, Benzamacril, Benzamacryl-isobutyl, Bialaphos, Binapacryl, Biphenyl, Bitertanol, Blasticidin-S, Bromuconazol, Bupirimat, Buthiobat,

Calciumpolysulfid, Capsimycin, Captafol, Captan, Carbendazim, Carboxin, Carvon, Chinomethionat (Quinomethionat), Chlobenthiazon, Chlorfenazol, Chloroneb, Chloropicrin, Chlorothalonil, Chlozolinat, Clozylacon, Cufraneb, Cymoxanil, Cyproconazol, Cyprodinil, Cyprofuram,

Debacarb, Dichlorophen, Diclobutrazol, Diclofluanid, Diclomezin, Dicloran, Diethofencarb, Difenoconazol, Dimethirimol, Dimethomorph, Diniconazol, Diniconazol-M, Dinocap, Diphenylamin, Dipyrithione, Ditalimfos, Dithianon, Dodemorph, Dodine, Drazoxolon,

Ediphenphos, Epoxiconazol, Etaconazol, Ethirimol, Etridiazol,

Famoxadon, Fenapanil, Fenarimol, Fenbuconazol, Fenfuram, Fenitropan, Fenpiclonil, Fenpropidin, Fenpropimorph, Fentinacetat, Fentinhydroxyd, Ferbam, Ferimzon, Fluazinam, Flumetover, Fluoromid, Fluquinconazol, Flurprimidol, Flusilazol, Flusulfamid, Flutolanil, Flutriafol, Folpet, Fosetyl-Alminium, Fosetyl-Natrium, Fthalid, Fuberidazol, Furalaxyl, Furametpyr, Furcarbonil, Furconazol, Furconazol-cis, Furmecyclox,

Guazatin,

Hexachlorobenzol, Hexaconazol, Hymexazol,

Imazalil, Imibenconazol, Iminoctadin, Iminoctadinealbesilat, Iminoctadinetriacetat, Iodocarb, Ipconazol, Iprobenfos (IBP), Iprodione, Irumamycin, Isoprothiolan, Isovaledione,

Kasugamycin, Kresoxim-methyl, Kupfer-Zubereitungen, wie: Kupferhydroxid, Kupfernaphthenat, Kupferoxychlorid, Kupfersulfat, Kupferoxid, Oxin-Kupfer und Bordeaux-Mischung,

Mancopper, Mancozeb, Maneb, Meferimzone, Mepanipyrim, Mepronil, Metalaxyl, Metconazol, Methasulfocarb, Methfuroxam, Metiram, Metomeclam, Metsulfovax, Mildiomycin, Myclobutanil, Myclozolin,

Nickel-dimethyldithiocarbamat, Nitrothal-isopropyl, Nuarimol,

Ofurace, Oxadixyl, Oxamocarb, Oxolinicacid, Oxycarboxim, Oxyfenthiin,

Paclobutrazol, Pefurazoat, Penconazol, Pencycuron, Phosdiphen, Pimaricin, Piperalin, Polyoxin, Polyoxorim, Probenazol, Prochloraz, Procymidon, Propamocarb, Propanosine-Natrium, Propiconazol, Propineb, Pyrazophos, Pyrifenox, Pyrimethanil, Pyroquilon, Pyroxyfur,

Quinconazol, Quintozen (PCNB),

Schwefel und Schwefel-Zubereitungen,

Tebuconazol, Tecloftalam, Tecnazen, Tetcyclacis, Tetraconazol, Thiabendazol, Thicyofen, Thifluzamide, Thiophanate-methyl, Thiram, Tioxymid, Tolclofos-methyl, Tolylfluanid, Triadimefon, Triadimenol, Triazbutil, Triazoxid, Trichlamid, Tricyclazol, Tridemorph, Triflumizol, Triforin, Triticonazol,

Uniconazol,

Validamycin A, Vinclozolin, Viniconazol,

Zarilamid, Zineb, Ziram sowie

Dagger G,

OK-8705,

OK-8801,

α-(1,1-Dimethylethyl)-β-(2-phenoxyethyl)-1H-1,2,4-triazol-1-ethanol,

α-(2,4-Dichlorphenyl)-β-fluor-b-propyl-1H-1,2,4-triazol-1-ethanol,

α-(2,4-Dichlorphenyl)-β-methoxy-a-methyl-1H-1,2,4-triazol-1-ethanol,

α-(5-Methyl-1,3-dioxan-5-yl)-β-[[4-(trifluormethyl)-phenyl]-methylen]-1H-1,2,4-triazol-1-ethanol,

(5RS,6RS)-6-Hydroxy-2,2,7,7-tetramethyl-5-(1H-1,2,4-triazol-1-yl)-3-octanon,

(E)-a-(Methoxyimino)-N-methyl-2-phenoxy-phenylacetamid,

{2-Methyl-1-[[[1-(4-methylphenyl)-ethyl]-amino]-carbonyl]-propyl}-carbaminsäure-1-isopropylester

1-(2,4-Dichlorphenyl)-2-(1H-1,2,4-triazol-1-yl)-ethanon-O-(phenylmethyl)-oxim,

1-(2-Methyl-1-naphthalenyl)-1H-pyrrol-2,5-dion,

1-(3,5-Dichlorphenyl)-3-(2-propenyl)-2,5-pyrrolidindion,

1-[(Diiodmethyl)-sulfonyl]-4-methyl-benzol,

1-[[2-(2,4-Dichlorphenyl)-1,3-dioxolan-2-yl]-methyl]-1H-imidazol,

1-[[2-(4-Chlorphenyl)-3-phenyloxiranyl]-methyl]-1H-1,2,4-triazol,

1-[1-[2-[(2,4-Dichlorphenyl)-methoxy]-phenyl]-ethenyl]-1H-imidazol,

1-Methyl-5-nonyl-2-(phenylmethyl)-3-pyrrolidinol,

2',6'-Dibrom-2-methyl-4'-trifluormethoxy-4'-trifluor-methyl-1,3-thiazol-5-carboxanilid,

2,2-Dichlor-N-[1-(4-chlorphenyl)-ethyl]-1-ethyl-3-methyl-cyclopropancarboxamid,

2,6-Dichlor-5-(methylthio)-4-pyrimidinyl-thiocyanat,

2,6-Dichlor-N-(4-trifluormethylbenzyl)-benzamid,

2,6-Dichlor-N-[[4-(trifluormethyl)-phenyl]-methyl]-benzamid,

2-(2,3,3-Triiod-2-propenyl)-2H-tetrazol,

2-[(1-Methylethyl)-sulfonyl]-5-(trichlormethyl)-1,3,4-thiadiazol,

2-[[6-Deoxy-4-O-(4-O-methyl-β-D-glycopyranosyl)-a-D-glucopyranosyl]-amino]-4-methoxy-1H-pyrrolo[2,3-d]pyrimidin-5-carbonitril,

2-Aminobutan,

2-Brom-2-(brommethyl)-pentandinitril,

2-Chlor-N-(2,3-dihydro-1,1,3-trimethyl-1H-inden-4-yl)-3-pyridincarboxamid,

2-Chlor-N-(2,6-dimethylphenyl)-N-(isothiocyanatomethyl)-aoetamid,

2-Phenylphenol(OPP),

3,4-Dichlor-1-[4-(difluormethoxy)-phenyl]-1H-pyrrol-2,5-dion,

3,5-Dichlor-N-[cyan[(1-methyl-2-propynyl)-oxy]-methyl]-benzamid,

3-(1,1-Dimethylpropyl-1-oxo)-1H-inden-2-carbonitril,

3-[2-(4-Chlorphenyl)-5-ethoxy-3-isoxazolidinyl]-pyridin,

4-Chlor-2-cyan-N,N-dimethyl-5-(4-methylphenyl)-1H-imidazol-1-sulfonamid,

4-Methyl-tetrazolo[1,5-a]quinazolin-5(4H)-on,

8-(1,1-Dimethylethyl)-N-ethyl-N-propyl-1,4-dioxaspiro[4,5]decan-2-methanamin,

8-Hydroxychinolinsulfat,

9H-Xanthen-9-earbonsäure-2-[(phenylamino)-carbonyl]-hydrazid,

bis-(1-Methylethyl)-3-methyl-4-[(3-methylbenzoyl)-oxy]-2,5-thiophendicarboxylat,

cis-1-(4-Chlorphenyl)-2-(1H-1,2,4-triazol-1-yl)-cycloheptanol,

cis-4-[3-[4-(1,1-Dimethylpropyl)-phenyl-2-methylpropyl]-2,6-dimethyl-morpholin-hydrochlorid,

Ethyl-[(4-chlorphenyl)-azo]-cyanoacetat,

Kaliumhydrogencarbonat,

Methantetrathiol-Natriumsalz,

Methyl-1-(2,3-dihydro-2,2-dimethyl-1H-inden-1-yl)-1H-imidazol-5-carboxylat,

Methyl-N-(2,6-dimethylphenyl)-N-(5-isoxazolylcarbonyl)-DL-alaninat,

Methyl-N-(chloracetyl)-N-(2,6-dimethylphenyl)-DL-alaninat,

N-(2,3-Dichlor-4-hydroxyphenyl)-1-methyl-cyclohexancarboxamid.

N-(2,6-Dimeihylphenyl)-2-methoxy-N-(tetrahydro-2-oxo-3-furanyl)-acetamid,

N-(2,6-Dimethylphenyl)-2-methoxy-N-(tetrahydro-2-oxo-3-thienyl)-acetamid,

N-(2-Chlor-4-nitrophenyl)-4-methyl-3-nitro-benzolsulfonamid,

N-(4-Cyclohexylphenyl)-1,4,5,6-tetrahydro-2-pyrimidinamin,

N-(4-Hexylphenyl)-1,4,5,6-tetrahydro-2-pyrimidinamin,

N-(5-Chlor-2-methylphenyl)-2-methoxy-N-(2-oxo-3-oxazolidinyl)-acetamid,

N-(6-Methoxy)-3-pyridinyl)-cyclopropancarboxamid,

N-[2,2,2-Trichlor-1-[(chloracetyl)-amino]-ethyl]-benzamid,

N-[3-Chlor-4,5-bis-(2-propinyloxy)-phenyl] N'-methoxy-methanimidamid,

N-Fonnyl-N-hydroxy-DL-alanin Natriumsalz,

O,O-Diethyl-[2-(dipropylamino)-2-oxoethyl]-ethylphosphoramidothioat,

O-Methyl-S-phenyl-phenylpropylphosphoramidothioate,

S-Methyl-1,2,3-benzothiadiazol-7-carbothioat,

spiro[2H]-1-Benzopyran-2,1'(3'H)-isobenzofuran]-3'-on.

**Bakterizide:**
Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

**Insektizide / Akarizide / Nematizide**

1. Acetylcholinesterase (AChE) Inhibitoren

1.1 Carbamate, zum Beispiel
Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb
Triazamate
1.2 Organophosphate, zum Beispiel
Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion

2. Natrium-Kanal-Modulatoren / Spannungsabhängige Natrium-Kanal-Blocker

2.1 Pyrethroide, zum Beispiel
Acrinathrin, Allethrin (d-cis-trans, d-trans), Beta-Cyfluthrin, Bifenthrin, Bioallethrin, Bioallethrin-S-cyclopentylisomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (IR-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (-1R- isomer), Tralomethrin, Transfluthrin, ZXI 8901, Pyrethrins (pyrethrum)
DDT

**2.2 Oxadiazine, zum Beispiel Indoxacarb**

3. Acetyleholin-Rezeptor-Agonisten/-Antagonisten

3.1 Chloronicotinyle, zum Beispiel
Acetamiprid, Clothianidin, Dinotefuran, Imidacloprid, Nitenpyram, Nithiazine, Thiacloprid, Thiamethoxam

3.2 Nicotine, Bensultap, Cartap

4. Acetylcholin-Rezeptor-Modulatoren

4.1 Spinosyne, zum Beispiel Spinosad

5, GABA-gesteuerte Chlorid-Kanal-Antagonisten

5.1 Cyclodiene Organochlorine, zum Beispiel
Camphechlor, Chlordane, Endosulfan, Gamma-HCH, HCH, Heptachlor, Lindane, Methoxychlor

5.2 Fiprole, zum Beispiel
Acetoprole, Ethiprole, Fipronil, Vaniliprole

6. Chlorid-Kanal-Aktivatoren

6.1 Mectine, zum Beispiel
Avermectin, Emamectin, Emamectin-benzoate, Ivermectin, Milbemycin

7. Juvenilhormon-Mimetika, zum Beispiel
Diofenolan, Epofenonane, Fenoxycarb, Hydroprene, Kinoprene, Methoprene, Pyriproxifen, Triprene

8. Ecdysonagonisten/disruptoren

8.1 Diacylhydrazine, zum Beispiel
Chromafenozide, Halofenozide, Methoxyfenozide, Tebufenozide

9. Inhibitoren der Chitinbiosynthese

9.1 Benzoylharnstoffe, zum Beispiel
Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron

9.2 Buprofezin

9.3 *Cyromazine*

10. Inhibitoren der oxidativen Phosphorylierung, ATP-Disruptoren

10.1 Diafenthiuron

10.2 Organotine, zum Beispiel Azocyclotin, Cyhexatin, Fenbutatin-oxide

11. Entkoppler der oxidativen Phoshorylierung durch Unterbrechung des H-Protongradienten

11.1 Pyrrole, zum Beispiel Chlorfenapyr

11.2 Dinitrophenole, zum Beispiel Binapacyrl, Dinobuton, Dinocap, DNOC

12. Seite-I-Elektronentransportinhibitoren

12.1 METI's, zum Beispiel Fenazaquin, Fenpyroximate, Pyrimidifen, Pyridaben, Tebufenpyrad, Tolfenpyrad

12.2 Hydramethylnon

12.3 Dicofol

13. Seite-II-Elektronentransportinhibitoren
Rotenone

14. Seite-III-Elektronentransportinhibitoren
Acequinocyl, Fluacrypyrim

15. Mikrobielle Disruptoren der Insektendarmmembran
Bacillus thuringiensis-Stämme

16. Inhibitoren der Fettsynthese
Tetronsäuren, zum Beispiel
Spirodiclofen, Spiromesifen
Tetramsäuren, zum Beispiel
3-(2,5-Dimethylphenyl)-8-methoxy-2-oxo-1-azaspiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8) and Carbonic acid, cis-3-(2,5-dimethylphenyl)-8-methoxy-2-oxo-1-azaspiro[4.5]dec-3-en-4-yl ethyl ester (CAS-Reg.-No.: 203313-23-1)

17, Carboxamide, zum Beispiel Flonicamid

18. Oktopaminerge Agonisten, zum Beispiel Amitraz

19. Inhibitoren der Magnesium-stimulierten ATPase, zum Beispiel Propargite

20. BDCAs, zum Beispiel N2-[1,1-Dimethyl-2-(methylsulfonyl)ethyl]-3-iodo-N1-[2-methyl-4-[1,2,2,2-tetrafluoro-1-(trifluoromethyl)ethyl]phenyl]-1,2-benzenedicarboxamide (CAS-Reg.-No.: 272451-65-7)

21. Nereistoxin-Analoge, zum Beispiel Thiocyclam hydrogen oxalate, Thiosultap-sodium

22. Biologika, Hormone oder Pheromone, zum Beispiel
Azadirachtin, Bacillus spec., Beauveria spec., Codlemone, Metarrhizium spec., Paecilomyces spec., Thuringiensin, Vertici1lium spec.

23. Wirkstoffe mit unbekannten oder nicht spezifischen Wirkmechanismen

23.1 Begasungsmittel, zum Beispiel
Aluminium phosphide, Methyl bromide, Sulfuryl fluoride

23.2 Selektive Fraßhemmer, zum Beispiel
Cryolite, Flonicamid, Pymetrozine

23.3 Milbenwachstumsinhibitoren, zum Beispiel
Clofentezine, Etoxazole, Hexythiazox

23.4 Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene,Verbutin,
ferner
(1R-cis)-[5-(Phenylmethyl)-3-furanyl]-methyl-3-[(dihydro-2-oxo-3(2H)-furanyliden)-methyl]-2,2-dimethylcyclopropancarboxylat
(3-Phenoxyphenyl)-methyl-2,2,3,3-tetramethylcyclopropanecarboxylat
1-[(2-Chlor-5-thiazolyl)methyl]tetrahydro-3,5-dimethyl-N-nitro-1,3,5-triazin-2(1H)-imin
2-(2-Chlor-6-fluorphenyl)-4-[4-(1,1-dimethylethyl)phenyl]-4,5-dihydro-oxazol
2-(Acetlyoxy)-3-dodecyl-1,4-naphthalindion
2-Chlor-N-[[[4-(1-phenylethoxy)-phenyl]-amino]-carbonyl]-benzamid
2-Chlor-N-[[[4-(2,2-dichlor-1,1-difluorethoxy)-phenyl]-amino]-carbonyl]-benzamid
3-Methylphenyl-propylcarbamat
4-[4-(4-Ethoxyphenyl)-4-methylpentyl]-1-fluor-2-phenoxy-benzol
4-Chlor-2-(1,1-dimethylethyl)-5-[[2-(2,6-dimethyl-4-phenoxyphenoxy)ethyl]thio]-3(2H)-pyridazinon
4-Chlor-2-(2-chlor-2-methylpropyl)-5-[(6-iod-3-pyridinyl)methoxy]-3(2H)-pyridazinon
4-Chlor-5-[(6-chlor-3-pyridinyl)methoxy]-2-(3,4-dichlorphenyl)-3(2H)-pyridazinon
Bacillus thuringiensis strain EG-2348
Benzoesäure [2-benzoyl-1-(1,1-dimethylethyl)-hydrazid
Butansäure 2,2-dimethyl-3-(2,4-dichlorphenyl)-2-oxo-1-oxaspiro[4.5]dec-3-en-4-yl-ester
[3-[(6-Chlor-3-pyridinyl)methyl]-2-thiazolidinyliden]-cyanamid
Dihydro-2-(nitromethylen)-2H-1,3-thiazine-3(4H)-carboxaldehyd

Ethyl-[2-[[1,6-dihydro-6-oxo-1-(phenylmethyl)-4-pyridazinyl]oxy]ethyl]-carbamat
N-(3,4,4-Trifluor-1-oxo-3-butenyl)-glycin
N-(4-Chlorphenyl)-3-[4-(difluormethoxy)phenyl]-4,5-dihydro-4-phenyl-1H-pyrazol-1-carboxamid
N-Methyl-N'-(1-methyl-2-propenyl)-1,2-hydrazindicarbothioamid
N-Methyl-N'-2-propenyl-1,2-hydrazindicarbothioamid
O,O-Diethyl-[2-(dipropylamino)-2-oxoethyl]-ethylphosphoramidothioat

Auch eine Mischung mit anderen bekannten Wirkstoffen, wie Herbiziden oder mit Düngemitteln und Wachstumsregulatoren ist möglich.

Die erfindungsgemäß einsetzbare Mittel können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Der Wirkstoffgehalt der aus den handelsüblichen Formulierungen bereiteten Anwendungsformen kann in weiten Bereichen variieren. Die Wirkstofflconzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten üblichen Weise.

Die erfindungsgemäß einsetzbare Mittel wirken nicht nur gegen Pflanzen schädlinge, sondern auch auf dem veterinärmedizinischen Sektor gegen tierische Parasiten (Ektoparasiten) wie Fliegen (stechend und leckend), parasitierende Fliegenlarven, Läuse, Haarlinge, Federlinge und Flöhe. Zu diesen Parasiten gehören:

Aus der Ordnung der Anoplurida z.B. Haematopinus spp., Linognathus spp., Pediculus spp., Phtirus spp., Solenopotes spp.

Aus der Ordnung der Mallophagida und den Unterordnungen Amblycerina sowie Ischnocerina z.B. Trimenopon spp., Menopon spp., Trinoton spp., Bovicola spp., Werneckiella spp., Lepikentron spp., Damalina spp., Trichodectes spp., Felicola spp.

Aus der Ordnung Diptera und den Unterordnungen Nematocerina sowie Brachycerina z.B. Aedes spp., Anopheles spp., Culex spp., Simulium spp., Eusimulium spp., Phlebotomus spp., Lutzomyia spp., Culicoides spp., Chrysops spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gasterophilus spp., Hippobosca spp., Lipoptena spp., Melophagus spp.

Aus der Ordnung der Siphonapterida z.B. Pulex spp., Ctenocephalides spp., Xenopsylla spp., Ceratophyllus spp.

Aus der Ordnung der Heteropterida z.B. Cimex spp., Triatoma spp., Rhodnius spp., Panstrongylus spp.

Aus der Ordnung der Blattarida z.B. Blatta orientalis, Periplaneta americana, Blattela germanica, Supella spp.

Die erfindungsgemäß einsetzbare Mittel eignen sich auch zur Bekämpfung von Arthropoden, die landwirtschaftliche Nutztiere, wie z.B. Rinder, Schafe, Ziegen, Pferde, Schweine, Esel, Kamele, Büffel, Kaninchen, Hühner, Puten, Enten, Gänse, Bienen befallen. Durch die Bekämpfung dieser Arthropoden sollen Todesfälle und Leistungsminderungen (bei Fleisch, Milch, Wolle, Häuten, Eiern, Honig usw.) vermindert werden, so dass durch den Einsatz der erfindungsgemäßen Wirkstoffkombinationen eine wirtschaftlichere und einfachere Tierhaltung möglich ist.

Die Anwendung der erfindungsgemäß einsetzbare Mittel geschieht im Veterinärsektor in bekannter Weise durch enterale Verabreichung in Form von beispielsweise Tabletten, Kapseln, Tränken, Drenchen, Granulaten, Pasten, Boli, des feed-through-Verfahrens, von Zäpfchen, durch parenterale Verabreichung, wie zum Beispiel durch Injektionen (intramuskulär, subcutan, intravenös, intraperitonel u.a.), Implantate, durch nasale Applikation, durch dermale Anwendung in Form beispielsweise des Tauchens oder Badens (Dippen), Sprühens (Spray), Aufgießens (Pouron und Spoton), des Waschens, des Einpuderns sowie mit Hilfe von wirkstoffhaltigen Formkörpern, wie Halsbändern, Ohrmarken, Schwanzmarken, Gliedmaßenbändern, Halftern, Markierungsvorrichtungen usw.

Bei der Anwendung für Vieh, Geflügel etc. kann man die Wirkstoffe als Formulierungen (beispielsweise Pulver, Emulsionen, fließfähige Mittel), die die Wirkstoffe in einer Menge von 1 bis 80 Gew.-% enthalten, direkt oder nach 100 bis 10 000-facher Verdünnung anwenden oder sie als chemisches Bad verwenden.

Beim Einsatz der erfindungsgemäß einsetzbare Mittel können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 0,1 und 10 000 g/ha, vorzugsweise zwischen 10 und 1 000 g/ha.

Die gute insektizide Wirkung der erfindungsgemäß einsetzbare Mittel geht aus den nachfolgenden Beispielen hervor. Während die einzelnen Wirkstoffe in der Wirkung Schwächen aufweisen, zeigen die Kombinationen eine Wirkung, die über eine einfache Wirkungssummierung hinausgeht.

Die zu erwartende Wirkung füreine gegebene Kombination zweier Verbindungen kann wie folgt berechent werden (vgl. COLBY, S.R.; "Caculating synergistic and antagonistic responses of herbicide combinations", Weeds 15,

Seiten 20-22, 1967);

Wenn

X = Wirksamkeit ausgedrückt in %, Abtötung im Vergleich zur unbehandelten Kontrolle durch Verbindung A (Wirkstoff der Formel I) bei einer Konzentration von m ppm
und

Y= Wirksamkeit ausgedrückt in %, Abtötung im Vergleich zur unbehandelten Kontrolle durch Verbindung B (Wirkstoff der Formel I) bei einer Konzentration von n ppm
und

E = Wirksamkeit ausgedrückt in %, Abtötung im Vergleich zur unbehandelten Kontrolle, wenn man die Mischung [illegible] endet,

dann ist

$$E = X + Y - \frac{X \times Y}{100}$$

Ist die tatsächliche Schädigung größer als berechnet, so ist die Kombination in ihrer Wirkung überadditiv, das heißt, sie zeigt einen synergistischen Effekt.

**<u>Beispiel A</u>**

**Aphis gossypii-Test**

| | |
|---|---|
| Lösungsmittel: | 7 Gewichtsteile Dimethylformamid |
| Emulgator: | 2 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Baumwollblätter (Gossypium hirsutum), die stark von der Baumwollblattlaus (Aphis gossypii) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden.

Resultate, die in diesem Test erreicht wurden, werden in der folgenden Tabelle gezeigt.

**Tabelle A**

pflanzenschädigende Insekten

**Aphis gossypii-Test**

| Wirkstoffe | Wirkstoffkonzentration in ppm | Abtötungsgrad in % nach 6$^d$ | |
|---|---|---|---|
| **Thiacloprid** | 0,8 | 25 | |
| **Clothianidin** | 0,8 | 0 | |
| **Thiacloprid + Clothianidin** (1 : 1) | | | |
| erfindungsgemäß | 0,8+0,8 | <u>gef.</u>* | <u>ber.</u>** |
| | | 98 | 25 |

*gef. = beobachtete insektizide Wirksamkeit
**ber. = mit der Colby-Formel berechnete Wirksamkeit

**<u>Beispiel B</u>**

**Bemisia tabaci-Test**

Lösungsmittel: 7 Gewichtsteile Dimethylformamid

(fortgesetzt)

| | |
|---|---|
| Emulgator: | 2 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Baumwollpflanzen (Gossypium hirsutum), die von Eiern, Larven und Puparien der Weißen Fliege (Bemisia tabaci) befallen sind, werden mit der Wirkstoffzubereitung der gewünschten Konzentration gespritzt.

Nach der gewünschten Zeit wird die Abtötung in % bestimmt. Dabei bedeutet 100 %, dass alle Weißen Fliegen abgetötet wurden; 0 % bedeutet, dass keine Weißen Fliegen abgetötet wurden.

Resultate, die in diesem Test erreicht wurden, werden in der folgenden Tabelle gezeigt.

**Tabelle B**

pflanzenschädigende Insekten

**Bemisia tabaci-Test**

| Wirkstoffe | Wirkstoffkonzentration in ppm | Abtötungsgrad in % nach 12$^d$ | |
|---|---|---|---|
| **Thiacloprid** | 0,8 | 80 | |
| **Clothianidin** | 0,8 | 35 | |
| **Thiacloprid + Clothianidin (1 : 1)** | | | |
| erfindungsgemäß | | gef.* | ber.** |
| | 0,8 + 0,8 | 92,5 | 87 |

*gef. = beobachtete insektizide Wirksamkeit
**ber. = mit der Colby-Formel berechnete Wirksamkeit

## Beispiel C

### Heliothis armigera-Test

| | |
|---|---|
| Lösungsmittel: | 7 Gewichtsteile Dimethylformamid |
| Emulgator: | 2 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Sojatriebe (Glycine max) werden durch Tauchen in die Wirkstoffzubereitung der gewünschten Konzentration behandelt und mit Heliothis armigera-Raupen besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden.

Resultate, die in diesem Test erreicht wurden, werden in der folgenden Tabelle gezeigt.

**Tabelle C**

pflanzenschädigende Insekten **Heliothis armigera-Test**

| Wirkstoffe | Wirkstoffkonzentration in ppm | Abtötungsgrad in % nach 6$^d$ | |
|---|---|---|---|
| **Thiacloprid** | 4 | 35 | |
| **Clothianidin** | 4 | 45 | |
| **Thiacloprid + Clothianidin** (1 : 1) | | | |
| erfindungsgemäß | | gef.* | ber.** |

(fortgesetzt)

pflanzenschädigende Insekten **Heliothis armigera-Test**

| Wirkstoffe | Wirkstoffkonzentration in ppm | Abtötungsgrad in % nach $6^d$ | |
|---|---|---|---|
| | 4+4 | 90 | 64,25 |
| *gef. = beobachtete insektizide Wirksamkeit<br>**ber. = mit der Colby-Formel berechnete Wirksamkeit | | | |

**Beispiel D**

**Myzus persicae-Test**

| | |
|---|---|
| Lösungsmittel: | 7 Gewichtsteile Dimethylformamid |
| Emulgator: | 2 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (Brassica oleracea), die stark von der Grünen Pfirsichblattlaus (Myzus persicae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden.

Resultate, die in diesem Test erreicht wurden, werden in der folgenden Tabelle gezeigt.

**Tabelle D**

pflanzenschädigende Insekten

**Myzus persicae-Test**

| Wirkstoffe | Wirkstoffkonzentration in ppm | Abtötungsgrad in % nach $6^d$ | |
|---|---|---|---|
| **Thiacloprid** | 0,8 | 20 | |
| **Clothianidin** | 0,8 | 65 | |
| **Thiacloprid** + **Clothianidin (1 : 1)** | | | |
| erfindungsgemäß | | gef.* | ber.** |
| | 0,8 + 0,8 | 95 | 72 |
| *gef. = beobachtete insektizide Wirksamkeit<br>**ber. = mit der Colby-Formel berechnete Wirksamkeit | | | |

**Beispiel E**

**Plutella xylostella-Test (normaler Stamm)**

| | |
|---|---|
| Lösungsmittel: | 7 Gewichtsteile Dimethylformamid |
| Emulgator: | 2 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (Brassica oleracea) werden durch Tauchen in die Wirkstoffzubereitung der gewünschten Konzentration behandelt und mit Raupen der Kohlschabe (Plutella xylostella/sensibler Stamm) besetzt, solange die Blätter noch feucht sind.

Nach der gewünschten Zeit wird die Abtötung in % bestimmt. Dabei bedeutet 100 %, dass alle Raupen abgetötet

wurden; 0 % bedeutet, dass keine Raupen abgetötet wurden.

Resultate, die in diesem Test erreicht wurden, werden in der folgenden Tabelle gezeigt.

**Tabelle E**

pflanzenschädigende Insekten **Plutella xylostella-Test (normaler Stamm)**

| Wirkstoffe | Wirkstoffkonzentration in ppm | Abtötungsgrad in % nach 6$^d$ | |
|---|---|---|---|
| **Thiacloprid** | 20 | 15 | |
| **Clothianidin** | 20 | 60 | |
| **Thiacloprid + Clothianidin (1 : 1)** | | | |
| erfindungsgemäß | | gef.* | ber.** |
| | 20 +20 | 100 | 66 |

*gef. = beobachtete insektizide Wirksamkeit
**ber. = mit der Colby-Formel berechnete Wirksamkeit

**Beispiel F**

**Heliothis armigera-Test**

Lösungsmittel: 7 Gewichtsteile Dimethylformamid
Emulgator: 2 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Sojatriebe (Glycine max) werden durch Tauchen in die Wirkstoffzubereitung der gewünschten Konzentration behandelt und mit Heliothis armigera-Raupen besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden.

Resultate, die in diesem Test erreicht wurden, werden in der folgenden Tabelle gezeigt.

**Tabelle F**

pflanzenschädigende Insekten

**Heliothis armigera-Test**

| Wirkstoffe | Wirkstoffkonzentration in ppm | Abtötungsgrad in % nach 7$^d$ | |
|---|---|---|---|
| **Imidacloprid** | 4 | 10 | |
| **Thiacloprid** | 0,8 | 0 | |
| **Imidacloprid +Thiacloprid (5 : 1)** | | | |
| erfindungsgemäß | | gef.* | ber.** |
| | 4+0,8 | 20 | 10 |

*gef. = beobachtete insektizide Wirksamkeit
**ber. = mit der Colby-Formel berechnete Wirksamkeit

**Beispiel G**

**Myzus-Test**

Lösungsmittel: 7 Gewichtsteile Dimethylformamid
Emulgator: 2 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.
Kohlblätter (Brassica oleracea), die stark von der Grünen Pfirsichblattlaus (Myzus persicae) befallen sind, werden durch Tauchen in die Wirkstoffzubereitung der gewünschten Konzentration behandelt.
Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden.
Resultate, die in diesem Test erreicht wurden, werden in der folgenden Tabelle gezeigt.

**Tabelle G**
pflanzenschädigende Insekten
**Myzus-Test**

| Wirkstoffe | Wirkstoffkonzentration in ppm | Abtötungsgrad in % nach 6$^d$ | |
|---|---|---|---|
| **Imidacloprid** | 0,16 | 10 | |
| **Thiacloprid** | 0,16 | 10 | |
| **Imidacloprid + Thiacloprid (1 : 1)** | | | |
| erfindungsgemäß | | gef.* | ber.** |
| | 0,16 + 0,16 | 30 | 19 |

*gef. = beobachtete insektizide Wirksamkeit
**ber. = mit der Colby-Formel berechnete Wirksamkeit

**Beispiel H**

**Plutella-Test (normaler Stamm)**

Lösungsmittel: 7 Gewichtsteile Dimethylformamid
Emulgator: 2 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.
Kohlblätter (Brassica oleracea) werden durch Tauchen in die Wirkstoffzubereitung der gewünschten Konzentration behandelt und mit Raupen der Kohlschabe (Plutella xylostella/normaler Stamm) besetzt, solange die Blätter noch feucht sind.
Nach der gewünschten Zeit wird die Abtötung in % bestimmt. Dabei bedeutet 100 %, dass alle Raupen abgetötet wurden; 0 % bedeutet, dass keine Raupen abgetötet wurden.
Resultate, die in diesem Test erreicht wurden, werden in der folgenden Tabelle gezeigt.

**Tabelle H**
pflanzenschädigende Insekten **Plutella-Test (normaler Stamm)**

| Wirkstoffe | Wirkstoffkonzentration in ppm | Abtötungsgrad in % nach 7$^d$ | |
|---|---|---|---|
| **Imidacloprid** | 20 | 15 | |
| **Thiacloprid** | 4 | 0 | |
| **Imidacloprid + Thiacloprid (5 : 1)** | | | |
| erfindungsgemäß | | gef.* | ber.** |
| | 20+4 | 55 | 15 |

*gef. = beobachtete insektizide Wirksamkeit
**ber. = mit der Colby-Formel berechnete Wirksamkeit

**Beispiel I**

**Spodoptera exigua-Test**

| | |
|---|---|
| Lösungsmittel: | 7 Gewichtsteile Dimethylformamid |
| Emulgator: | 2 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.
Kohlblätter (Brassica oleracea) werden durch Tauchen in die Wirkstoffzubereitung der gewünschten Konzentration behandelt und mit Raupen des Heerwurms (Spodoptera exigua) besetzt, solange die Blätter noch feucht sind.
Nach der gewünschten Zeit wird die Abtötung in % bestimmt. Dabei bedeutet 100 %, dass alle Raupen abgetötet wurden; 0 % bedeutet, dass keine Raupen abgetötet wurden.
Resultate, die in diesem Test erreicht wurden, werden in der folgenden Tabelle gezeigt.

**Tabelle I**

pflanzenschädigende Insekten **Spodoptera exigua-Test**

| Wirkstoffe | Wirkstoffkonzentration in ppm | Abtötungsgrad in % nach 7^d | |
|---|---|---|---|
| **Imidacloprid** | 100 | 45 | |
| **Thiacloprid** | 100 | 0 | |
| **Imidacloprid** + **Thiacloprid (1 : 1)** | | | |
| erfindungsgemäß | | gef.* | ber.** |
| | 100 + 100 | 55 | 45 |

*gef. = beobachtete insektizide Wirksamkeit
**ber. = mit der Colby-Formel berechnete Wirksamkeit

**Beispiel J**

**Spodoptera frugiperda-Test**

| | |
|---|---|
| Lösungsmittel: | 7 Gewichtsteile Dimethylformamid |
| Emulgator: | 2 Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.
Kohlblätter (Brassica oleracea) werden durch Tauchen in die Wirkstoffzubereitung der gewünschten Konzentration behandelt und mit Raupen des Heerwurms (Spodoptera frugiperda) besetzt, solange die Blätter noch feucht sind.
Nach der gewünschten Zeit wird die Abtötung in % bestimmt. Dabei bedeutet 100%, dass alle Raupen abgetötet wurden; 0% bedeutet, dass keine Raupen abgetötet wurden.
Resultate, die in diesem Test erreicht wurden, werden in der folgenden Tabelle gezeigt.

**Tabelle J**

pflanzenschädigende Insekten **Spodoptera frugiperda-Test**

| Wirkstoffe | Wirkstoffkonzentration in ppm | Abtötungsgrad in % nach 7^d |
|---|---|---|
| **Imidacloprid** | 0,8 | 20 |
| **Thiacloprid** | 0,8 | 10 |

(fortgesetzt)

pflanzenschädigende Insekten **Spodoptera frugiperda-Test**

| Wirkstoffe | Wirkstoffkonzentration in ppm | Abtötungsgrad in % nach $7^d$ | |
|---|---|---|---|
| **Imidacloprid + Thiacloprid (1 : 1)** | | | |
| erfindungsgemäß | | gef.* | ber.** |
| | 0,8 + 0,8 | 40 | 28 |
| *gef. = beobachtete insektizide Wirksamkeit<br>**ber. = mit der Colby-Formel berechnete Wirksamkeit | | | |

**Beispiel K**

**Bemisia tabaci-Test**

Lösungsmittel: 7 Gewichtsteile Dimethylformamid
Emulgator: 2 Gewichtsteil Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Baumwollpflanzen (Gossypium hirsutum), die von Eiern, Larven und Puparien der Weißen Fliege (Bemisia tabaci) befallen sind, werden mit der Wirkstoffzubereitung der gewünschten Konzentration gespritzt.

Nach der gewünschten Zeit wird die Abtötung in % bestimmt. Dabei bedeutet 100%, dass alle Weißen Fliegen abgetötet wurden; 0% bedeutet, dass keine Weißen Fliegen abgetötet wurden.

Resultate, die in diesem Test erreicht wurden, werden in der folgenden Tabelle gezeigt.

Tabelle K

pflanzenschädigende Insekten **Bemisia tabaci-Test**

| Wirkstoffe | Wirkstoffkonzentration in ppm | Abtötungsgrad in % nach $10^d$ | |
|---|---|---|---|
| **Imidacloprid** | 0,16 | 5 | |
| **Clothianidin** | 0,16 | 5 | |
| **Imidacloprid** + **Clothianidin (1 : 1)** | | | |
| erfindungsgemäß | | gef.* | ber.** |
| | 0,16+0,16 | 35 | 9,75 |
| *gef. = beobachtete insektizide Wirksamkeit<br>**ber. = mit der Colby-Formel berechnete Wirksamkeit | | | |

**Beispiel L**

**Heliothis armigera-Test**

Lösungsmittel: 7 Gewichtsteile Dimethylformamid
Emulgator: 2 Gewichtsteil Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Sojatriebe (Glycine max) werden durch Tauchen in die Wirkstoffzubereitung der gewünschten Konzentration behandelt und mit Heliothis armigera-Raupen besetzt, solange die Blätter noch feucht sind.

Nach der gewünschten Zeit wird die Abtötung in % bestimmt. Dabei bedeutet 100%, dass alle Raupen abgetötet

wurden; 0% bedeutet, dass keine Raupen abgetötet wurden.

Resultate, die in diesem Test erreicht wurden, werden in der folgenden Tabelle gezeigt.

**Tabelle L**

pflanzenschädigende Insekten **Heliothis armigera-Test**

| Wirkstoffe | Wirkstoffkonzentration in ppm | Abtötungsgrad in % nach 6[d] | |
|---|---|---|---|
| **Imidacloprid** | 4 | 10 | |
| **Clothianidin** | 4 | 0 | |
| **Imidacloprid + Clothianidin (1 : 1)** | | | |
| erfindungsgemäß | | gef.* | ber.** |
| | 4+4 | 70 | 10 |
| *gef. = beobachtete insektizide Wirksamkeit | | | |
| **ber. = mit der Colby-Fonnel berechnete Wirksamkeit | | | |

Beispiel M

**Myzus persicae-Test**

Lösungsmittel: 7 Gewichtsteile Dimethylformamid
Emulgator: 2 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (Brassica oleracea), die stark von der Grünen Pfirsichblattlaus (Myzus persicae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden.

Resultate, die in diesem Test erreicht wurden, werden in der folgenden Tabelle gezeigt.

**Tabelle M**

pflanzenschädigende Insekten **Myzus persicae-Test**

| Wirkstoffe | Wirkstoffkonzentration in ppm | Abtötungsgrad in % nach 6[d] | |
|---|---|---|---|
| **Imidacloprid** | 0,16 | 50 | |
| **Clothianidin** | 0,16 | 0 | |
| **Imidacloprid + Clothianidin (1 : 1)** | | | |
| erfindungsgemäß | | gef.* | ber.** |
| | 0,16 + 0,16 | 70 | 50 |
| *gef. = beobachtete insektizide Wirksamkeit | | | |
| **ber. = mit der Colby-Formel berechnete Wirksamkeit | | | |

**Beispiel N**

**Spodoptera exigua-Test**

Lösungsmittel: 7 Gewichtsteile Dimethylformamid
Emulgator: 2 Gewichtsteil Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die-gewünschte Konzentration.

Kohlblätter (Brassica oleracea) werden durch Tauchen in die Wirkstoffzubereitung der gewünschten Konzentration behandelt und mit Raupen des Heerwurms (Spodoptera exigua) besetzt, solange die Blätter noch feucht sind.

Nach der gewünschten Zeit wird die Abtötung in % bestimmt. Dabei bedeutet 100%, dass alle Raupen abgetötet wurden; 0% bedeutet, dass keine Raupen abgetötet wurden.

Resultate, die in diesem Test erreicht wurden, werden in der folgenden Tabelle gezeigt.

Tabelle N

pflanzenschädigende Insekten **Spodoptera exigua-Test**

| Wirkstoffe | Wirkstoffkonzentration in ppm | Abtötungsgrad in % nach $6^d$ | |
|---|---|---|---|
| **Imidacloprid** | 20 | 10 | |
| **Clothianin** | 20 | 10 | |
| **Imidacloprid + Clothianin (1 : 1)** | | | |
| erfindungsgemäß | | gef.* | ber.** |
| | 20 +20 | 70 | 19 |

*gef. = beobachtete insektizide Wirksamkeit
**ber. = mit der Colby-Formel berechnete Wirksamkeit

## Patentansprüche

**1.** Verwendung von Wirkstoffkombinationen ausgewählt aus der Liste:

| Mischung Nr. | Erster Wirkstoff | Zweiter Wirkstoff |
|---|---|---|
| 1 | Imidacloprid | Clothianidin |
| 2 | Imidacloprid | Dinotefuran |
| 4 | Imidacloprid | Thiacloprid |
| 5 | Imidacloprid | Acetamiprid |
| 6 | Imidacloprid | Nitenpyram |
| 7 | Clothianidin | Dinotefuran |
| 8 | Clothianidin | Thiamethoxam |
| 9 | Clothianidin | Thiacloprid |
| 10 | Clothianidin | Acetamiprid |
| 11 | Clothianidin | Nitenpyram |
| 12 | Dinotefuran | Thiamethoxam |
| 13 | Dinotefuran | Thiacloprid |
| 14 | Dinotefuran | Acetamiprid |
| 15 | Dinotefuran | Nitenpyram |
| 16 | Thiamethoxam | Thiacloprid |
| 19 | Thiacloprid | Acetamiprid |
| 20 | Thiacloprid | Nitenpyram |
| 21 | Acetamiprid | Nitenpyram |

zur Bekämpfung von Insekten, in der Landwirtschaft wobei die Wirkstoffe in einem Mischungsverhältnis von 10:1 bis 1:10 bezogen auf Gewichtsteile vorliegen, und in dieser Verwendung eine synergistische Erhöhung der insektiziden Wirksamkeit erreicht wird.

**2.** Verwendung von Wirkstoffkombinationen nach Anspruch 1 zum Schutz von Saatgut gegenüber Insekten.

## Claims

**1.** Use of active compound combinations selected from the list:

| Mixture No. | First active compound | Second active compound |
|---|---|---|
| 1 | imidacloprid | clothianidin |
| 2 | imidacloprid | dinotefuran |
| 4 | imidacloprid | thiacloprid |
| 5 | imidacloprid | acetamiprid |
| 6 | imidacloprid | nitenpyram |
| 7 | clothianidin | dinotefuran |
| 8 | clothianidin | thiamethoxam |
| 9 | clothianidin | thiacloprid |
| 10 | clothianidin | acetamiprid |
| 11 | clothianidin | nitenpyram |
| 12 | dinotefuran | Thiamethoxam |
| 13 | dinotefuran | thiacloprid |
| 14 | dinotefuran | acetamiprid |
| 15 | dinotefuran | nitenpyram |
| 16 | thiamethoxam | thiacloprid |
| 19 | thiacloprid | acetamiprid |
| 20 | thiacloprid | nitenpyram |
| 21 | acetamiprid | Nitenpyram |

for controlling insects in agriculture, the active compounds being present in a mixing ratio of 10:1 to 1:10 based on parts by weight, and, in this use, a synergistically increased insecticidal activity being achieved.

**2.** Use of active compound combinations according to Claim 1 for protecting seed from insects.

## Revendications

**1.** Utilisation de combinaisons de substances actives choisies dans la liste

| No. de mélange | 1ère substance active | 2nde substance active |
|---|---|---|
| 1 | imidaclopride | clothianidine |
| 2 | imidaclopride | dinotéfuran |
| 3 | imidaclopride | thiaméthoxam |
| 4 | imidaclopride | thiaclopride |
| 5 | imidaclopride | acétamipride |
| 6 | imidaclopride | nitenpyram |

(suite)

| No. de mélange | 1ère substance active | 2nde substance active |
|---|---|---|
| 7 | clothianidine | dinotéfuran |
| 8 | clothianidine | thiaméthoxam |
| 9 | clothianidine | thiaclopride |
| 10 | clothianidine | acétamipride |
| 11 | clothianidine | nitenpyram |
| 12 | dinotéfuran | thiaméthoxam |
| 13 | dinotéfuran | thiaclopride |
| 14 | dinotéfuran | acétamipride |
| 15 | dinotéfuran | nitenpyram |
| 16 | thiaméthoxam | thiaclopride |
| 17 | thiaméthoxam | acétamipride |
| 18 | thiaméthoxam | nitenpyram |
| 19 | thiaclopride | acétamipride |
| 20 | thiaclopride | nitenpyram |
| 21 | acétamipride | nitenpyram |

pour la lutte contre les insectes en agriculture, dans laquelle les substances actives sont comprises dans un rapport de mélange de 10:1 à 1:10 en parties de poids, et dans cette utilisation, une augmentation synergique de l'efficacité insecticide est obtenue.

**2.** Utilisation des combinaisons de substances actives suivant la revendication 1 pour la protection des semences contre les insectes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2003063911 A
- US 4272417 A
- US 4245432 A
- US 4808430 A
- US 5876739 A
- US 20030176428 A1
- WO 2002080675 A1
- WO 2002028186 A2


### In der Beschreibung aufgeführte Nicht-Patentliteratur


- **COLBY, S.R.** Caculating synergistic and antagonistic responses of herbicide combinations. *Weeds,* 1967, vol. 15, 20-22